# EUROPEAN PATENT APPLICATION

(11) **EP 3 459 737 A1**
(43) Date of publication of application: **27.03.2019**
(21) Application number: 18169126.2
(22) Date of filing: 24.04.2018
(51) Int. Cl.: B33Y 30/00, B33Y 50/00, B33Y 40/00, B29C 64/124, B29C 64/386, B29C 64/232, B29C 64/255, B29C 64/30, B29C 64/245, B29C 64/264

(54) **THREE-DIMENSIONAL PRINTING DEVICE AND LIQUID TANK THEREOF**

(30) Priority: 22.09.2017 CN 201710863653
(71) Applicant: XYZprinting, Inc., New Taipei City 22201 (TW); Kinpo Electronics, Inc., New Taipei City 22201 (TW)
(72) Inventor: CHEN, Peng-Yang, 22201 New Taipei City (TW)
(74) Representative: Emde, Eric

(57) **Abstract**

A liquid tank (100) suitable for a three-dimensional printing device (10) is provided. The liquid tank (100) includes a tank body (110), at least one release thin film (120), and at least one identification portion (130). The tank body (110) is configured for holding photosensitive resin (140) and has a light transmissive bottom (111). The release thin film (120) is located in the tank body (110) and is attached to the light transmissive bottom (111). The identification portion (130) is disposed at the release thin film (120) and adapted to a reader (16) of the three-dimensional printing device (10). The reader (16) is configured to reads the identification portion (130), so as to obtain a usage record of the release thin film (120). A three-dimensional printing device (10) is also provided.

## Description

### BACKGROUND OF THE INVENTION

### 1. Field of the Invention

The invention relates to a three-dimensional printing technology. More particularly, the invention relates to a three-dimensional printing device and a liquid tank thereof.

### 2. Description of Related Art

Along with technology advances, the conventional flat printing technology is no longer able to satisfy usage requirements. Accordingly, increasing numbers of manufacturers have involved in the development and research of the three-dimensional printing technology. As the three-dimensional printing technology and material applications thereof become more and more mature, the three-dimensional objects manufactured through the three-dimensional printing are considerably-improved in terms of precision and strength. As such, the three-dimensional printing technology is gradually adopted by the manufacturing sector and the industry sector and thus becomes an advanced manufacturing technology of the next generation.

Taking the stereolithography in the three-dimensional printing technology for example, the liquid photosensitive resin is required to be disposed in the liquid tank. Moreover, through manipulating light rays by a calculator, the light source scans liquid photosensitive resin according to one piece of layered cross-section data of a work piece. As such, the liquid photosensitive resin in the scanning area generates a polymerisation reaction and is thus cured, and that one of the thin layers of the work piece is formed. Subsequently, the liquid photosensitive resin is repeatedly scanned according to other pieces of the layered cross-section data of the work piece, and the work piece is thereby manufactured and obtained.

Generally, the release thin film is disposed most of the time at the bottom of the liquid tank and may be made of teflon® or silicone. The thin layer may be smoothly detached from the bottom of the liquid tank during a drawing process as teflon® and silicone feature a characteristic of non-sticking, and that the thin layer is prevented from being damaged.

### SUMMARY OF THE INVENTION

The invention provides a three-dimensional printing device and a liquid tank thereof which enable a user to obtain a usage record of a release thin film.

In an embodiment of the invention, a liquid tank is suitable for a three-dimensional printing device. The liquid tank includes a tank body, at least one release thin film, and at least one identification portion. The tank body is configured for holding photosensitive resin and has a light transmissive bottom. The release thin film is located in the tank body and is attached to the light transmissive bottom. The identification portion is disposed at the release thin film and adapted to a reader of the three-dimensional printing device. The reader is configured to read the identification portion, so as to obtain a usage record of the release thin film.

In the liquid tank of an embodiment of the invention, the identification portion is a barcode or a near field communication tag.

In the liquid tank of an embodiment of the invention, the identification portion and the light transmissive bottom are respectively located at two opposite sides of the release thin film.

In the liquid tank of an embodiment of the invention, the identification portion is in contact with the light transmissive bottom.

In the liquid tank of an embodiment of the invention, the release thin film includes a first release thin film and a second release thin film, the first release thin film is in contact with the light transmissive bottom, and the second release thin film and the light transmissive bottom are respectively located at two opposite sides of the first release thin film.

In the liquid tank of an embodiment of the invention, the identification portion is disposed at the second release thin film and is in contact with the first release thin film.

In the liquid tank of an embodiment of the invention, the identification portion is disposed at the first release thin film and is in contact with the second release thin film.

In the liquid tank of an embodiment of the invention, the identification portion is disposed at the second release thin film, and the identification portion and the first release thin film are respectively located at two opposite sides of the second release thin film.

In the liquid tank of an embodiment of the invention, the identification portion is sandwiched between the second release thin film and the first release thin film.

In the liquid tank of an embodiment of the invention, the identification portion includes a first identification portion disposed at the first release thin film and a second identification portion disposed at the second release thin film, the first identification portion is in contact with the second release thin film, the second identification portion is in contact with the first release thin film, and the first identification portion is aligned to the second identification portion.

In the liquid tank of an embodiment of the invention, a material of the release thin film comprises teflon® or silicone.

In an embodiment of the invention, a three-dimensional printing device includes a controller, a light source, a reader, a driving motor, a lifting and lowering platform, and a liquid tank. The light source, the reader, and the driving motor are electrically coupled to the controller, respectively. The lifting and lowering platform is coupled to the driving motor. The liquid tank includes a tank body, at least one release thin film, and at least one identification portion. The tank body is configured for holding photosensitive resin and has a light transmissive bottom. The lifting and lowering platform is disposed above the tank body, the lifting and lowering platform is driven to move close to the light transmissive bottom or move away from the light transmissive bottom through controlling the driving motor by the controller, and the light source is disposed below the light transmissive bottom. The release thin film is located in the tank body and is attached to the light transmissive bottom. The identification portion is disposed at the release thin film. A usage record of the at least one release thin film is obtained through controlling the reader to read the identification portion by the controller.

In the three-dimensional printing device of an embodiment of the invention, a number of times of different blocks of the release thin film being irradiated by light rays from the light source are recorded, and a projection area of the light source to be projected on the release thin film is adjusted accordingly.

In the three-dimensional printing device of an embodiment of the invention, a record of the number of times of the different blocks of the release thin film being irradiated by the light rays from the light source is obtained through controlling the reader to read the identification portion by the controller.

To sum up, in the liquid tank of the embodiments of the invention, the identification portion is disposed at the release thin film and is read through the reader of the three-dimensional printing device, and that the usage record of the release thin film is obtained. As such, when a service life of the release thin film is about to end or is already ended, a user is able to replace such the release thin film or replace the liquid tank equipped with such the release thin film in a timely manner.

To make the aforementioned and other features and advantages of the invention more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic side view of a liquid tank and a three-dimensional printing device applying the liquid tank according to a first embodiment of the invention.
FIG. 2 is a top view of the liquid tank of FIG. 1.
FIG. 3 is a schematic side view of a liquid tank according to a second embodiment of the invention.
FIG. 4 is a schematic side view of a liquid tank according to a third embodiment of the invention.
FIG. 5 is a schematic side view of a liquid tank according to a fourth embodiment of the invention.
FIG. 6 is a schematic side view of a liquid tank according to a fifth embodiment of the invention.
FIG. 7 is a schematic side view of a liquid tank according to a sixth embodiment of the invention.
FIG. 8 is a schematic side view of a liquid tank according to a seventh embodiment of the invention.
FIG. 9 is a schematic side view of a liquid tank according to an eighth embodiment of the invention.
FIG. 10 is a schematic side view of a liquid tank according to a ninth embodiment of the invention.

### DESCRIPTION OF THE EMBODIMENTS

Descriptions of the invention are given with reference to the exemplary embodiments illustrated by the accompanying drawings. Wherever possible, the same reference numbers are used in the drawings and the description to refer to the same or like parts.

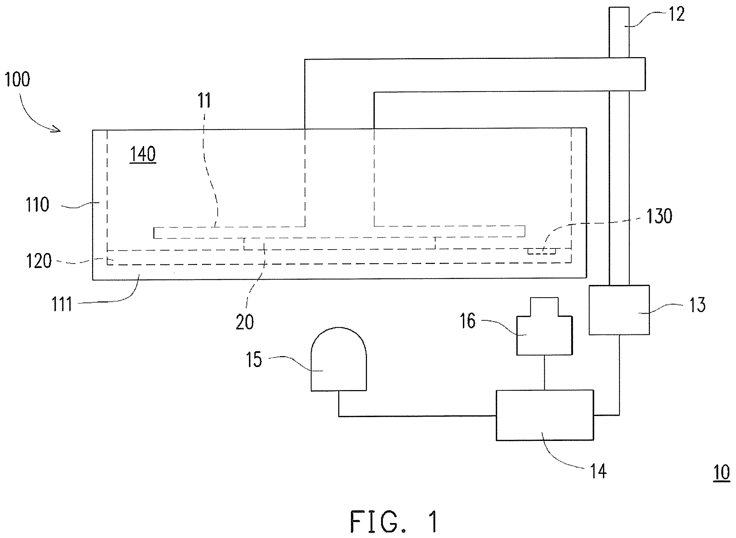

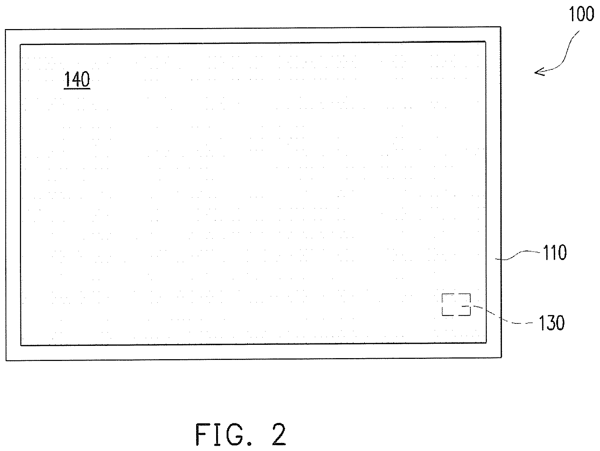

FIG. 1 is a schematic side view of a liquid tank and a three-dimensional printing device applying the liquid tank according to a first embodiment of the invention. FIG. 2 is a top view of the liquid tank of FIG. 1. Referring to FIG. 1 and FIG. 2, in the present embodiment, a three-dimensional printing device 10 adopts the stereolighography. The three-dimensional printing device 10 includes a liquid tank100, a lifting and lowering platform 11, a sliding bar 12, a driving motor 13, a controller 14, a light source 15, and a reader 16. The lifting and lowering platform 11 is coupled to the driving motor 13 through the sliding bar 12, so as to be driven by the driving motor 13 to move up and down along the sliding bar 12. The driving motor 13, the light source 15, and the reader 16 are electrically coupled to the controller 14, respectively, so as to be acted by receiving signals transmitted from the controller 14 or to transmit signals to the controller 14.

The liquid tank 100 includes a tank body 110, at least one release thin film 120, and at least one identification portion 130, wherein the tank body 110 is configured to hold a liquid photosensitive resin 140 and has a light transmissive bottom 111. The lifting and lowering platform 11 is disposed above the tank body 110. The lifting and lowering platform 11 is driven to move close to the light transmissive bottom 111 or move away from the light transmissive bottom 111 through controlling the driving motor 13 by the controller 14. The light source 15 and the reader 16 are respectively disposed below the light transmissive bottom 111. In other words, the light source 15 (and the reader 16) and the lifting and lowering platform 11 are respectively disposed at two opposite sides of the light transmissive bottom 111. The light source 15 is configured to be controlled by the controller 14 to project light rays towards the light transmissive bottom 111, such that the light rays from the light source 15 enter into the tank body 110 through the light transmissive bottom 111 and scan the liquid photosensitive resin 140. As such, the liquid photosensitive resin 140 in a scanning area generates a polymerisation reaction and is thus cured, and that one of thin layers 20 of a work piece is formed between the lifting and lowering platform 11 and the light transmissive bottom 111.

The release thin film 120 is located in the tank body 110 and is attached to the light transmissive bottom 111. Further, the release thin film 120 separates the liquid photosensitive resin 140 from the light transmissive bottom 111. In other words, the liquid photosensitive resin 140 is not in direct contact with the light transmissive bottom 111 and instead is in direct contact with the release thin film 120. As such, the thin layer 20 formed after the liquid photosensitive resin 140 is cured is located between the lifting and lowering platform 11 and the light transmissive bottom 111 and is in contact with the lifting and lowering platform 11 and the light transmissive bottom 111. In the present embodiment, a material of the release thin film 120 may be teflon® featuring characteristics of non-sticking and light transmission. As such, the light rays emitted by the light source 15 may penetrate through the light transmissive bottom 111 and the release thin film 120 and projects to the liquid photosensitive resin 140 held in the tank body 110. Before the rest of the thin layers are subsequently formed according to layered cross-section data of the work piece, the lifting and lowering platform 11 moves away from the light transmissive bottom 111, and that the thin layer 20 attached onto the lifting and lowering platform 11 is detached from the release thin film 120.

In the present embodiment, the identification portion 130 may be a barcode and is disposed at the release thin film 120. For instance, the barcode may be formed on a contact surface between the release thin film 120 and the liquid photosensitive resin 140 by means of printing. Moreover, the identification portion 130 and the light transmissive bottom 111 are respectively located at two opposite sides of the release thin film 120. As shown in FIG. 2, the identification portion 130 is located at a corner of the release thin film 120. In other words, the identification portion 130 is to be disposed outside a major forming area of each of the thin layers of the work piece on the release thin film 120, so as to prevent integrity and accuracy of the work piece from being affected after being formed and to provide a greater area for use by the forming area. In other embodiments, the identification portion may also be located in the major forming area of each of the thin layers of the work piece on the release thin film, which is not limited by the invention herein.

When each of the thin layers of the work piece is formed, a process in which the thin layers are detached from the release thin film 120 for multiple times is required. When the work piece is manufactured, a number of times of the release thin film 120 being used (i.e., a number of times of the thin layers being detached from the release thin film 120) is recorded. Subsequently, the reader 16 is controlled to read the identification portion 130 through the controller 14, a usage record (i.e., the number of times of the thin layers being detached from the release thin film 120) of the release thin film 120 in the tank body 110 is thus obtained. A service life of the release thin film 120 is thus further calculated, and when the service life of the release thin film 120 is about to end or is already ended, a user is thereby able to replace such the release thin film 120 or replace the liquid tank 100 equipped with such the release thin film 120 in a timely manner.

Other embodiments are described for illustration in the following. It should be noted that the reference numerals and a part of the contents in the previous embodiment are used in the following embodiments, in which identical reference numerals indicate identical or similar components, and repeated description of the same technical contents is omitted. Please refer to the descriptions of the previous embodiment for the omitted contents, which will not be repeated hereinafter.

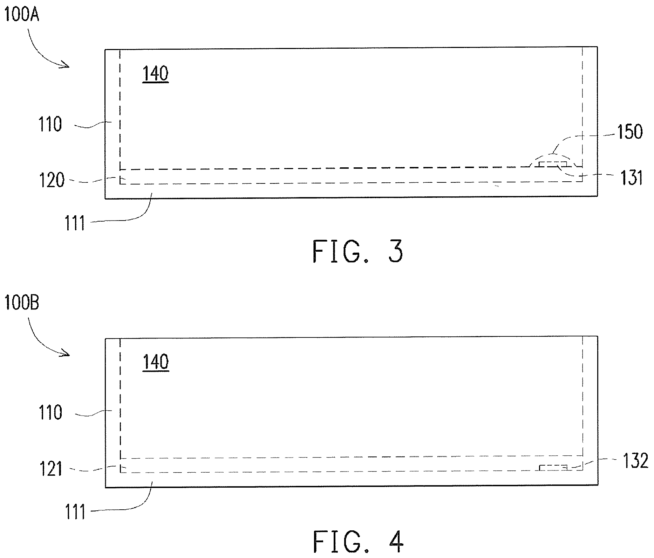

FIG. 3 is a schematic side view of a liquid tank according to a second embodiment of the invention. Referring to FIG. 3, a liquid tank 100A of the present embodiment is approximately similar to the liquid tank 100 of the first embodiment, but a difference therebetween is described as follows: in the present embodiment, an identification portion 131 may be a near field communication (NFC) tag. For instance, the near field communication tag is attached to a contact surface between the release thin film 120 and the liquid photosensitive resin 140 and is protected by a protection film 150; thereby is prevented from being in contact with the liquid photosensitive resin 140 and is prevented from being damaged.

FIG. 4 is a schematic side view of a liquid tank according to a third embodiment of the invention. Referring to FIG. 4, a liquid tank 100B of the present embodiment is approximately similar to the liquid tank 100 of the first embodiment, but a difference therebetween is described as follows: in the present embodiment, the material of the release thin film 121 may be silicone featuring the characteristics of non-sticking and light transmission. An identification portion 132 may be a barcode or a near field communication tag. For instance, the barcode or the near field communication tag may be embedded into the release thin film 121 and is in contact with the light transmissive bottom 111. In a manufacturing step, the barcode or the near field communication tag is placed at the light transmissive bottom 111 first, liquid silicone is then injected into the tank body 110, and finally the liquid silicone is cured, such that the barcode or the near field communication tag is embedded into the release thin film 121. In the circumstances that the near field communication tag is embedded in the release thin film 121, the near field communication tag is prevented from being in contact with the liquid photosensitive resin 140 and is prevented from being damaged.

On the other hand, when each of the thin layers of the work piece is formed, numbers of times of different blocks of the release thin film 121 being irradiated by the light rays from the light source 15 are different. When the work piece is manufactured, the numbers of times of the different blocks of the release thin film 121 being irradiated by the light rays from the light source 15 are recorded. Subsequently, the reader 16 (shown in FIG. 1) is controlled to read the identification portion 132 through the controller 14 (shown in FIG. 1), the numbers of times of the different blocks of the release thin film 121 being irradiated in the tank body 110 are thus obtained, and a matrix distribution diagram is simulated to be further provided to a user. The release thin film 121 of the present embodiment is made of silicone, and silicone is susceptible to be whitened after being irradiated by the light rays from the light source 15 for multiple times. The user may obtain the numbers of times of the different blocks of the release thin film 121 being irradiated by the light rays from the light source 15 according to the matrix distribution diagram, so as to determine whether several blocks of the release thin film 121 are severely whitened. As such, the user may thus further replace the release thin film 121 or the liquid tank 100B equipped with such the release thin film 121 or adjust a projection area of the light rays from the light source 15 to be projected on the release thin film 121, so as to prevent the integrity and accuracy of the work piece from being affected after being formed.

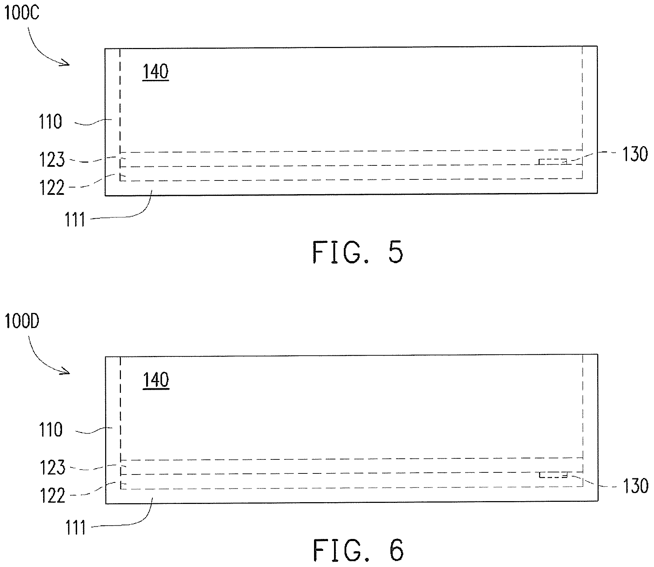

FIG. 5 is a schematic side view of a liquid tank according to a fourth embodiment of the invention. Referring to FIG. 5, a liquid tank 100C of the present embodiment is approximately similar to the liquid tank 100 of the first embodiment, but a difference therebetween is described as follows: in the present embodiment, a first release thin film 122 and a second release thin film 123 are included in the release thin film and may be made of teflon®. The first release thin film 122 is in contact with the light transmissive bottom 111. The second release thin film 123 and the light transmissive bottom 111 are respectively located at two opposite sides of the first release thin film 122. The identification portion 130 is disposed at the second release thin film 123 and may be formed on a contact surface between the second release thin film 123 and the first release thin film 122 by means of printing. In other words, the identification portion 130 is in contact with the first release thin film 122 and is located at a position where the first release thin film 122 and the second release thin film 123 are bonded to each other. Note that the service life may be prolonged through having two layers of the release thin films disposed. In addition, the first release thin film 122 and the second release thin film 123 may be made of different materials. For instance, the first release thin film 122 is made of teflon®, and the second release thin film 123 is made of silicone. As such, the first release thin film 122 is provided to better accommodate the identification portion 130, and manufacturing of the release thin films is thus facilitated.

FIG. 6 is a schematic side view of a liquid tank according to a fifth embodiment of the invention. Referring to FIG. 6, a liquid tank 100D of the present embodiment is approximately similar to the liquid tank 100 of the first embodiment, but a difference therebetween is described as follows: in the present embodiment, a first release thin film 122 and a second release thin film 123 are included in the release thin film and may be made of teflon®. The first release thin film 122 is in contact with the light transmissive bottom 111. The second release thin film 123 and the light transmissive bottom 111 are respectively located at two opposite sides of the first release thin film 122. The identification portion 130 is disposed at the first release thin film 122 and may be formed on a contact surface between the first release thin film 122 and the second release thin film 123 by means of printing. In other words, the identification portion 130 is in contact with the second release thin film 123 and is located at a position where the first release thin film 122 and the second release thin film 123 are bonded to each other. Note that the service life may be prolonged through having two layers of the release thin films disposed.

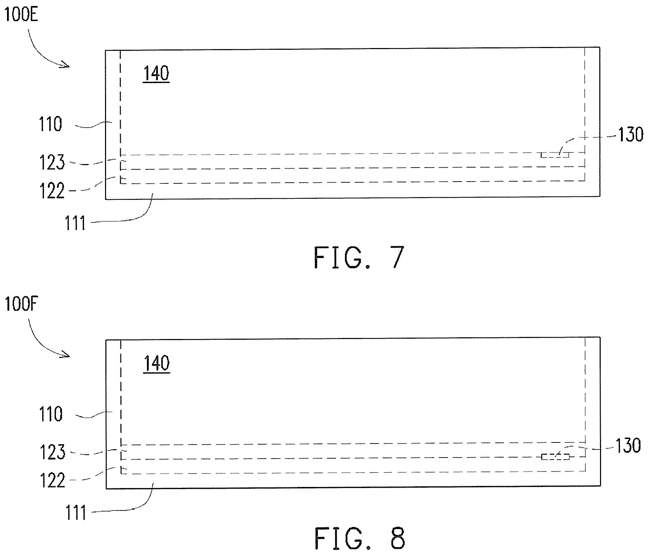

FIG. 7 is a schematic side view of a liquid tank according to a sixth embodiment of the invention. Referring to FIG. 7, a liquid tank 100E of the present embodiment is approximately similar to the liquid tank 100 of the first embodiment, but a difference therebetween is described as follows: in the present embodiment, a first release thin film 122 and a second release thin film 123 are included in the release thin film and may be made of teflon®. The first release thin film 122 is in contact with the light transmissive bottom 111. The second release thin film 123 and the light transmissive bottom 111 are respectively located at two opposite sides of the first release thin film 122. The identification portion 130 is disposed at the second release thin film 123 and may be formed on a contact surface between the second release thin film 123 and the liquid photosensitive resin 140 by means of printing. That is to say, the identification portion 130 and the first release thin film 122 are respectively located at two opposite sides of the second release thin film 123. Note that the service life may be prolonged through having two layers of the release thin films disposed.

FIG. 8 is a schematic side view of a liquid tank according to a seventh embodiment of the invention. Referring to FIG. 8, a liquid tank 100F of the present embodiment is approximately similar to the liquid tank 100 of the first embodiment, but a difference therebetween is described as follows: in the present embodiment, a first release thin film 122 and a second release thin film 123 are included in the release thin film and may be made of teflon®. The first release thin film 122 is in contact with the light transmissive bottom 111. The second release thin film 123 and the light transmissive bottom 111 are respectively located at two opposite sides of the first release thin film 122. The identification portion 130 is sandwiched between the first release thin film 122 and the second release thin film 123. Note that the service life may be prolonged through having two layers of the release thin films disposed.

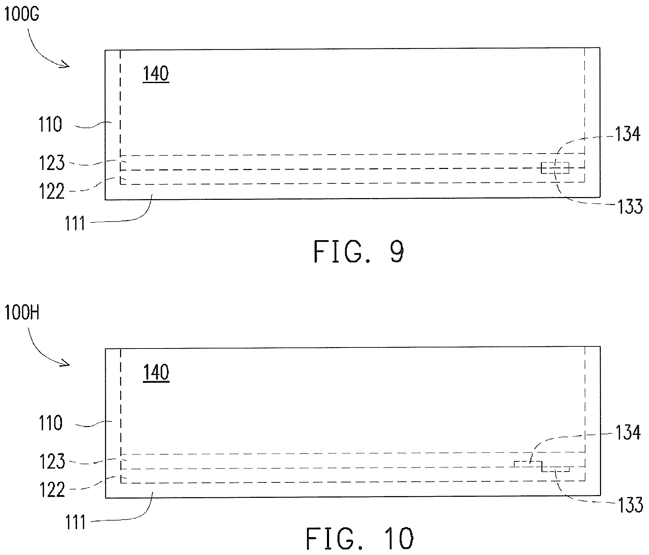

FIG. 9 is a schematic side view of a liquid tank according to an eighth embodiment of the invention. Referring to FIG. 9, a liquid tank 100G of the present embodiment is approximately similar to the liquid tank 100 of the first embodiment, but a difference therebetween is described as follows: in the present embodiment, a first release thin film 122 and a second release thin film 123 are included in the release thin film and may be made of teflon®. The identification portion includes a first identification portion 133 and a second identification portion 134, wherein the first identification portion 133 (e.g., a barcode) is disposed at the first release thin film 122 and may be formed on a contact surface between the first release thin film 122 and the second release thin film 123 by means of printing. The second identification portion 134 (e.g., a barcode) is disposed at the second release thin film 123 and may be formed on a contact surface between the second release thin film 123 and the first release thin film 122 by means of printing. Through enabling the first identification portion 133 to be aligned to the second identification 134, for example, the first identification portion 133 is completely overlapped with the second identification portion 134, assembling made by the user may be performed easily and accuracy of the assembling is also enhanced. Note that the service life may be prolonged through having two layers of the release thin films disposed.

FIG. 10 is a schematic side view of a liquid tank according to a ninth embodiment of the invention. Referring to FIG. 10, a liquid tank 100H of the present embodiment is approximately similar to the liquid tank 100 of the first embodiment, but a difference therebetween is described as follows: in the present embodiment, a first release thin film 122 and a second release thin film 123 are included in the release thin film and may be made of teflon®. The identification portion includes a first identification portion 133 and a second identification portion 134, wherein the first identification portion 133 (e.g., a barcode) is disposed at the first release thin film 122 and may be formed on a contact surface between the first release thin film 122 and the second release thin film 123 by means of printing. The second identification portion 134 (e.g., a barcode) is disposed at the second release thin film 123 and may be formed on a contact surface between the second release thin film 123 and the first release thin film 122 by means of printing. Through enabling the first identification portion 133 to be aligned to the second identification 134, for example, at least a single side the first identification portion 133 is aligned to at least a side of the second identification portion 134, assembling made by the user may be performed easily and accuracy of the assembling is also enhanced. Note that the service life may be prolonged through having two layers of the release thin films disposed.

In view of the foregoing, in the liquid tank of the embodiments of the invention, the identification portion is disposed at the release thin film and is read through the reader of the three-dimensional printing device, and that the usage record of the release thin film is obtained. Further, when each of the thin layers of the work piece is formed, the process in which the thin layers are detached from the release thin film for multiple times is required. When the work piece is manufactured, the number of times of the release thin film being used (i.e., the number of times of thin layers being detached from the release thin film) is recorded. Subsequently, the reader is controlled to read the identification portion through the controller of the three-dimensional printing device, the usage record of the release thin film in the tank body (i.e., the number of times of the thin layers being detached from the release thin film) is thus obtained. The service life of the release thin film is thereby further calculated, and when the service life of the release thin film is about to end or is already ended, the user is able to replace such the release thin film or replace the liquid tank equipped with such the release thin film in a timely manner. Moreover, if the user has multiple three-dimensional devices, when the liquid tank of one of the three-dimensional printing devices breaks down, the liquid tanks of the rest of the three-dimensional devices may be used for replacement. At this time, as the identification portion is used, even though the liquid tank is moved to the new three-dimensional printing device, the usage record may still be read instantly through the identification portion and is updated continuously when being used in the three-dimensional printing device of which the liquid tank is moved in.

## Claims

1. A liquid tank (100, 100A, 100B, 100C, 100D, 100E, 100F, 100G, 100H) adapted for a three-dimensional printing device (10), **characterized in that** the liquid tank (100, 100A, 100B, 100C, 100D, 100E, 100F, 100G, 100H) comprises:
a tank body (110), configured for holding photosensitive resin (140) and has a light transmissive bottom (111);
at least one release thin film (120, 121, 122, 123), located in the tank body (110) and attached to the light transmissive bottom (111); and
at least one identification portion (130, 131, 132, 133, 134), disposed at the at least one release thin film (120, 121, 122, 123), adapted to a reader (16) of the three-dimensional printing device (10), and the reader (16) being configured to read the at least one identification portion (130, 131, 132, 133, 134) for obtaining a usage record of the at least one release thin film (120, 121, 122, 123).

2. The liquid tank (100, 100A, 100B, 100C, 100D, 100E, 100F, 100G, 100H) as claimed in claim 1, **characterized in that** the identification portion (130, 131, 132, 133, 134) is a barcode or a near field communication tag.

3. The liquid tank (100, 100A, 100B, 100C, 100D, 100E, 100F, 100G, 100H) as claimed in claim 1, **characterized in that** the identification portion (130, 131, 132, 133, 134) and the light transmissive bottom (111) are respectively located at two opposite sides of the release thin film (120, 121, 122, 123).

4. The liquid tank (100, 100A, 100B, 100C, 100D, 100E, 100F, 100G, 100H) as claimed in claim 1, **characterized in that** the identification portion (130, 131, 132, 133, 134) is in contact with the light transmissive bottom (111).

5. The liquid tank (100, 100A, 100B, 100C, 100D, 100E, 100F, 100G, 100H) as claimed in claim 1, **characterized in that** the release thin film (120, 121, 122, 123) comprises a first release thin film (122) and a second release thin film (123), the first release thin film (122) is in contact with the light transmissive bottom (111), and the second release thin film (123) and the light transmissive bottom (111) are respectively located at two opposite sides of the first release thin film (122).

6. The liquid tank (100, 100A, 100B, 100C, 100D, 100E, 100F, 100G, 100H) as claimed in claim 5, **characterized in that** the identification portion (130, 131, 132, 133, 134) is disposed at the second release thin film (123) and is in contact with the first release thin film (122).

7. The liquid tank (100, 100A, 100B, 100C, 100D, 100E, 100F, 100G, 100H) as claimed in claim 5, **characterized in that** the identification portion (130, 131, 132, 133, 134) is disposed at the first release thin film (122) and is in contact with the second release thin film (123).

8. The liquid tank (100, 100A, 100B, 100C, 100D, 100E, 100F, 100G, 100H) as claimed in claim 5, **characterized in that** the identification portion (130, 131, 132, 133, 134) is disposed at the second release thin film (123), and the identification portion (130, 131, 132, 133, 134) and the first release thin film (122) are respectively located at two opposite sides of the second release thin film (123).

9. The liquid tank (100, 100A, 100B, 100C, 100D, 100E, 100F, 100G, 100H) as claimed in claim 5, **characterized in that** the identification portion (130, 131, 132, 133, 134) is sandwiched between the second release thin film (123) and the first release thin film (122).

10. The liquid tank (100, 100A, 100B, 100C, 100D, 100E, 100F, 100G, 100H) as claimed in claim 5, **characterized in that** the identification portion (130, 131, 132, 133, 134) comprises a first identification portion (133) disposed at the first release thin film (122) and a second identification portion (134) disposed at the second release thin film (123), wherein the first identification portion (133) is in contact with the second release thin film (123), the second identification portion (134) is in contact with the first release thin film (122), and the first identification portion (133) is aligned to the second identification portion (134).

11. The liquid tank (100, 100A, 100B, 100C, 100D, 100E, 100F, 100G, 100H) as claimed in claim 1, **characterized in that** a material of the release thin film (120, 121, 122, 123) comprises teflon® or silicone.

12. A three-dimensional printing device (10), **characterized in that** the three-dimensional printing device (10) comprises:
a controller (14);
a light source (15), electrically coupled to the controller (14);
a reader (16), electrically coupled to the controller (14);
a driving motor (13), electrically coupled to the controller (14);
a lifting and lowering platform (11), coupled to the driving motor (13); and
a liquid tank (100, 100A, 100B, 100C, 100D, 100E, 100F, 100G, 100H) comprising:
a tank body (110), configured for holding photosensitive resin (140) and has a light transmissive bottom (111), wherein the lifting and lowering platform (11) is disposed above the tank body (110), the lifting and lowering platform (11) is driven to move close to the light transmissive bottom (111) or move away from the light transmissive bottom (111) through controlling the driving motor (13) by the controller (14), and the light source (15) is disposed below the light transmissive bottom (111);
at least one release thin film (120, 121, 122, 123), located in the tank body (110) and attached to the light transmissive bottom (111); and
at least one identification portion (130, 131, 132, 133, 134), disposed at the at least one release thin film (120, 121, 122, 123), wherein a usage record of the at least one release thin film (120, 121, 122, 123) is obtained through controlling the reader (16) to read the at least one identification portion (130, 131, 132, 133, 134) by the controller (14).

13. The three-dimensional printing device (10) as claimed in claim 12, **characterized in that** a number of times of different blocks of the release thin film (120, 121, 122, 123) being irradiated by light rays from the light source (15) are recorded, and a projection area of the light source (15) to be projected on the release thin film (120, 121, 122, 123) is adjusted accordingly.

14. The three-dimensional printing device (10) as claimed in claim 12, **characterized in that** a record of the number of times of the different blocks of the release thin film (120, 121, 122, 123) being irradiated by the light rays from the light source (15) is obtained through controlling the reader (16) to read the identification portion (130, 131, 132, 133, 134) by the controller (14).
